# EUROPÄISCHE PATENTSCHRIFT

(11) **EP 3 719 410 B1**
(45) Veröffentlichungstag und Bekanntmachung des Hinweises auf die Patenterteilung: **09.11.2022**
(21) Anmeldenummer: 20164847.4
(22) Anmeldetag: 23.03.2020
(51) Int. Cl.: F24F 13/02, F16L 23/14

(54) **GEHÄUSE MIT FLANSCHECKE**
HOUSING WITH A FLANGE CORNER
BOÎTIER AVEC BRIDE D'ANGLE

(30) Priorität: 01.04.2019 DE 202019101828 U
(43) Veröffentlichungstag der Anmeldung: 07.10.2020
(73) Patentinhaber: Wildeboer Bauteile GmbH, 26826 Weener (DE)
(72) Erfinder: Dahms, Arne, 26826 Weener (DE); Gouterney, Kilian, 26826 Weener (DE)
(74) Vertreter: Ter Meer Steinmeister & Partner

(56) Entgegenhaltungen:
- EP-A1- 1 840 440
- CN-Y- 2 489 166
- DE-U- 7 204 744
- US-A1- 2008 111 378

## Beschreibung

Die Erfindung betrifft ein Gehäuse mit einer Flanschecke , wobei das Gehäuse zwei an einer Kante zusammenlaufende Wände aufweist, von denen jeweils ein Flansch, der ein in seiner Längsrichtung verlaufendes Hohlprofil bildet, derart absteht, dass die Flansche in einer Ebene liegen und an einer Ecke des Gehäuses zusammenlaufen und dort miteinander eine Lücke bilden, und mit einem Eckwinkel, der in einem Stück ausgebildet ist und sich so mit beiden Flanschen in Eingriff bringen lässt, dass er die Lücke ausfüllt, wobei jeder der Flansche mindestens eine in das Innere des Hohlprofils führende Öffnung aufweist, von denen zumindest eine eine Einstecköffnung ist, und wobei der Eckwinkel zwei Eingriffsteile aufweist, von denen einer durch eine Bewegung des Eckwinkels in die Einstecköffnung des einen Flansches einführbar ist.

Solche Flanschecken findet man beispielsweise an kanalförmigen Blechgehäusen, die einen Abschnitt eines Lüftungskanals mit rechteckigem Querschnitt bilden. Mit Hilfe der Flansche können dann mehrere solcher Gehäuse zu einem längeren Lüftungskanal miteinander verbunden werden. Entsprechende Flansche können auch an Gehäusen von Volumenstromreglern, Brandschutzklappen und ähnlichen lüftungstechnischen Bauteilen und Einrichtungen vorgesehen sein, die sich dann in die Lüftungsleitung einbauen lassen. Bei der Herstellung können beispielsweise die Gehäusewände und der Teil des Bleches , der später die Flansche bilden soll, aus einem ebenen Blech ausgestanzt oder ausgeschnitten werden, so dass man einen ebenen Zuschnitt erhält. Der Teil des Bleches, der später die Flansche bilden soll, wird dann in mehreren Schritten zu den Hohlprofilen umgeformt und aus der Ebene des Hauptteils des Zuschnitts herausgebogen, so dass er in einer gemeinsamen, zu den späteren Wänden des Gehäuses rechtwinkligen Ebene liegt. Wenn anschließend der Blechzuschnitt an Biegelinien, die rechtwinklig zu den Flanschen verlaufen, gekantet und zu einem Kanal mit rechteckigem Querschnitt geschlossen wird, so liegen die Flansche zwar immer noch in einer gemeinsamen Ebene, klaffen aber an der Ecke des Gehäuses auseinander, so dass dort zwischen den Enden der Flansche eine Lücke entsteht. Diese Lücke wird dann mit einem nachträglich angesetzten Eckwinkel geschlossen, so dass man eine ohne Unterbrechung durchgehende Flanschecke erhält. Wenn alle vier Ecken des Gehäuses in dieser Weise ausgebildet sind, erhält man am Ende des Gehäuses einen ununterbrochenen Flansch, der einen dichten Anschluss des Gehäuses an ein angrenzendes gleichartiges Gehäuse ermöglicht.

Bei einigen bekannten Ausführungsformen sind die Eckwinkel zweiteilig ausgebildet. Jeder der beiden Teile hat annähernd die Form einer rechteckigen Platte, die in das offene Ende des Hohlprofils eines Flansches eingesteckt werden kann. Wenn der andere Teil des Eckwinkels in entsprechender Weise in das Hohlprofil des anderen Flansches eingesteckt wird, überlappen die beiden Teile des Eckwinkels einander auf einer etwa quadratischen Fläche, die die Lücke zwischen den beiden Flanschen ausfüllt.

Ein Nachteil dieser Bauform besteht darin, dass die beiden Teile des Eckwinkels erst dann eine ausreichende Stabilität bekommen, wenn sie anschließend durch Schrauben, Kleben oder Schweißen miteinander verbunden werden. Zudem muss ggf. die Fuge zwischen den beiden Teilen des Eckwinkels abgedichtet werden.

Es sind auch Ausführungsformen denkbar, bei denen der Eckwinkel in einem Stück ausgebildet ist. Wenn die Hohlprofile der Flansche bereits vollständig ausgebildet sind, lässt sich dieser Eckwinkel jedoch nicht mehr mit seinen Schenkeln in die Hohlprofile einführen, da die Schenkel und damit auch die Einsteckrichtungen rechtwinklig zueinander orientiert sind. Bei diesen Flanschecken muss deshalb der Herstellungsprozess so modifiziert werden, dass die Hohlprofile der Flansche zunächst noch nicht vollständig geschlossen werden, so dass der Eckwinkel von einer offenen Seite her in die Hohlprofile der beiden Flansche eingelegt werden kann. Erst dann wird in mindestens einem weiteren Kantungsschritt das Hohlprofil geschlossen, so dass es den betreffenden Schenkel des Eckwinkels umgreift. Auf diese Weise erhält man zwar eine stabile Verbindung des Eckwinkels mit den angrenzenden Flanschen, doch ist dazu ein relativ aufwendiger Prozessablauf erforderlich, weil vor dem letzten Kantungsschritt der Eckwinkel eingelegt und in Position gehalten werden muss, bis die Hohlprofile der Flansche geschlossen sind.

Aus DE 72 04 744U ist ein Gehäuse der eingangs genannten Art bekannt, bei dem vier lose Flansche zunächst mit vier einteiligen und einsteckbaren Eckwinkeln zu einem Rahmen verbunden werden bevor diese dann am Ende eines Kanalgehäuses montiert bzw. im Ganzen auf die vier Gehäusewände gesteckt werden. Dies führt jedoch zu einer Vielzahl an Teilen und Verbindungsstellen, so dass in der Regel nach der Flanschmontage aufwendigere Abdichtmaßnahmen erforderlich werden.

Aufgabe der Erfindung ist es, eine Flanschecke zu schaffen, bei welcher der Eckwinkel in einem Stück ausgebildet ist und sich dennoch so mit dem bereits vollständig ausgebildeten und zu Hohlprofilen geschlossenen Flanschen in Eingriff bringen lässt, dass eine gute Verbindung des Eckwinkels mit beiden Flanschen erreicht wird.

Diese Aufgabe wird erfindungsgemäß dadurch gelöst, dass die Einstecköffnung es erlaubt, den Eckwinkel in einer einheitlichen, zur Ebene der Flansche parallelen Einsteckrichtung in die Flansche einzustecken, und dabei der andere Eingriffsteil im eingesteckten Zustand die Öffnung des anderen Flansches ausfüllt.

Im Endzustand sind somit beide Eingriffsteile des Eckwinkels in den Öffnungen der Flansche aufgenommen, so dass die Flansche und der Eckwinkel einen stabilen Verband bilden. Dennoch kann das Einstecken des Eckwinkels noch in einem Stadium erfolgen, in dem die Hohlprofile der Flansche bereits vollständig ausgebildet sind.

Nach dem Einsetzen des Eckwinkels können bei Bedarf der Eckwinkel und die Flansche durch Kleben, Schweißen, Fügen oder dergleichen fest miteinander verbunden und ggf. mittels vorher aufgetragener Dichtmassen aneinander abgedichtet werden.

Vorteilhafte Ausgestaltungen und Weiterbildungen der Erfindung sind in den Unteransprüchen angegeben.

Bei einigen Ausführungsformen sind die Öffnungen beider Flansche als Einstecköffnungen ausgebildet, die eine einheitliche Einsteckrichtung ermöglichen.

Beispielsweise kann die eine Einstecköffnung durch das offene Ende des Hohlprofils eines der Flansche gebildet werden, während die andere Einstecköffnung in einer Wand des anderen Flansches des Hohlprofils gebildet ist. Die einheitliche Einsteckrichtung ist dann die Längsrichtung des ersten Flansches, und im Endstadium der Einsteckbewegung tritt der zweite Eingriffsteil des Eckwinkels vollständig in die Einstecköffnung des anderen Flansches ein, so dass er diese ausfüllt und verschließt. Wahlweise können der Rand des Eingriffsteils und der Randbereich der zugehörigen Einstecköffnung so aneinander angepasst sein, dass der Eingriffsteil im Endzustand bündig in der Wand des Hohlprofils liegt.

In einer anderen Ausführungsform ist die einheitliche Einsteckrichtung eine Diagonale der Flanschecke. Die Einstecköffnungen können dann beispielsweise bei beiden Flanschen als in Längsrichtung des jeweiligen Flansches verlaufende Schlitze in den Wänden des Hohlprofils ausgebildet sein, die die Außenkante des Flansches bilden. Die Eingriffsteile des Eckwinkels können dann beispielsweise durch die in einer gemeinsamen Ebene liegenden Schenkel des Eckwinkels oder durch in dieser gemeinsamen Ebene liegende Teile jedes Schenkels gebildet werden.

In einer anderen Ausführungsform sind die Einstecköffnungen als zueinander und zu der Diagonalen der Flanschecke parallele Schlitze in den Wänden der Hohlprofile ausgebildet. Die zugehörigen Eingriffsteile des Eckwinkels werden dann durch aus der Hauptfläche der Flanschecke herausgebogene Laschen gebildet, die jeweils in einen der Schlitze einführbar sind.

In einer anderen Ausführungsform ist nur eine der beiden Öffnungen der Flansche als Einstecköffnung ausgebildet, während die Öffnung des anderen Flansches durch eine Öffnung in einer Seitenwand des Hohlprofils gebildet wird. Beispielsweise kann die Einstecköffnung das offene Ende eines der beiden Hohlprofile sein, und die Öffnung des anderen Hohlprofils kann in einer Wand dieses Hohlprofils gebildet sein, die parallel zur Ebene der Flansche verläuft. Wahlweise kann sich diese Öffnung auch über die gesamte Länge des Flansches erstrecken, so dass das Hohlprofil dieses Flansches beispielsweise ein U-Profil ist. Der erste Eingriffsteil des Eckwinkels wird dann einfach durch einen Schenkel des Eckwinkels gebildet, der in die Einstecköffnung, also das offene Ende des ersten Hohlprofils eingesteckt wird. Der andere Eingriffsteil wird durch den anderen Schenkel des Eckwinkels gebildet, der in der Endphase der Einsteckbewegung in die zugehörige Öffnung eintritt und diese ausfüllt. Dabei können die Flansche und der Eckwinkel so gestaltet sein, dass sich der Eckwinkel zunächst in einer etwas geneigten Stellung in die Einstecköffnung einführen lässt und erst am Ende der Einsteckbewegung in die Ebene der Flansche geschwenkt wird, wobei der andere Eingriffsteil in der zugehörigen

Öffnung einrastet. Auf diese Weise wird bereits unter Ausnutzung einer möglichen elastischen Verformung ohne zusätzliche Befestigungsmittel ein stabiler formschlüssiger Sitz des Eckwinkels in der endgültigen Einrastposition erreicht.

Im folgenden werden Ausführungsbeispiele anhand der Zeichnung näher erläutert.

Es zeigen:
- Fig. 1: eine perspektivische Ansicht eines Gehäuses mit einer erfindungsgemäßen Flanschecke im Zustand unmittelbar vor dem Einsetzen eines Eckwinkels;
- Fig. 2: die Flanschecke nach Fig. 1 in vollständig montiertem Zustand;
- Fig. 3 und 4: Darstellungen analog zu Fig. 1 und 2 für eine andere Ausführungsform der Flanschecke;
- Fig. 5 bis 8: Flanschecken gemäß zwei weiteren Ausführungsbeispielen, jeweils im Zustand vor und nach dem letzten Montageschritt; und
- Fig. 9 bis 11: eine Flanschecke gemäß einem weiteren Ausführungsbeispiel in verschiedenen Stadien vor, während und nach der Montage.

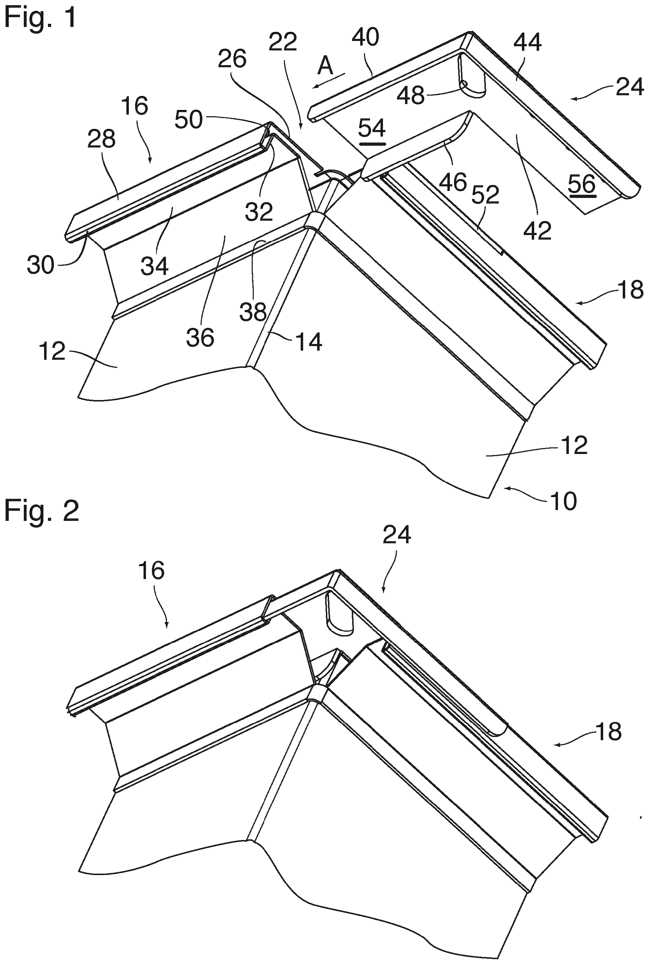

In Fig. 1 ist strichpunktiert ein Ende eines kanalförmigen Gehäuses 10 aus Blech gezeigt, das einen rechteckigen Querschnitt aufweist und beispielsweise einen Abschnitt eines Lüftungskanals bildet. Von dem Gehäuse 10 sieht man zwei Seitenwände 12, die längs einer Kante 14 rechtwinklig zueinander gekantet sind. Am Ende des Gehäuses 10 trägt jede der Seitenwände 12 einen Flansch 16 bzw. 18, der rechtwinklig von der betreffenden Seitenwand vorspringt. Im gezeigten Beispiel sind die Flansche 16 und 18 (zusammen mit zwei weiteren Flanschen an den Enden der beiden übrigen Seitenwände des Gehäuses, die in Fig. 1 nicht sichtbar sind) als Endabschnitte der betreffenden Seitenwände 12 in einem Stück mit dem Gehäuse 10 und damit aus einem gemeinsamen Zuschnitt gefertigt.

In einer weiteren Ausführungsform könnten die Flansche 16, 18 auch ein separates Bauteil bilden, das entweder so auf die Seitenwände 12 des Gehäuses aufgesteckt wird, dass jede Seitenwand zwischen einer Bodenwand des Flansches und dem Stützschenkel 38 liegt, oder mit einer Bodenwand auf den Seitenwänden 12 aufliegt und beispielsweise durch Schweißen oder Kleben daran befestigt ist.

Da die Flansche 16, 18 rechtwinklig von der jeweiligen Seitenwand 12 abstehen, diese beiden Seitenwände 12 aber ihrerseits rechtwinklig zueinander orientiert sind, klafft zwischen den Enden der beiden Flansche 16, 18 eine Lücke 22, die im Endzustand (Fig. 2) durch einen in Fig. 1 noch nicht eingesetzten Eckwinkel 24 ausgefüllt wird.

Jeder der Flansche 16, 18 bildet ein Hohlprofil mit einer im gezeigten Beispiel insgesamt annähernd L-förmigen Querschnittsform. Die Hohlprofile der beiden Flansche 16, 18 sind identisch. Die Profilform soll anhand des Flansches 16 näher beschrieben werden.

Das Hohlprofil des Flansches 16 wird am Ende des Gehäuses 10 begrenzt durch eine vordere Stirnwand 26, die rechtwinklig von der Seitenwand 12 absteht. An die Stirnwand 26 schließt sich eine äußere Wand 28 an, die über einen Verbindungsstreifen 30 in eine innere Wand 32 übergeht. Die äußere Wand 28, der Verbindungsstreifen 30 und die innere Wand 32 bilden zusammen den kürzeren Schenkel des L-förmigen Hohlprofils. An die innere Wand 32 schließt sich eine Rückwand 34 an, die parallel zu der Stirnwand 26 verläuft und mit dieser den längeren Schenkel des L bildet. An die Rückwand 34 schließt sich nach innen eine Stützwand 36 an, die schräg zu der Seitenwand 12 zurück läuft und sich über einen Stützschenkel 38 auf der Seitenwand 12 abstützt.

Der Eckwinkel 24 hat zwei gleich lange, zueinander rechtwinklige Schenkel 40, 42, die jeweils einen L- bzw. C-förmigen Querschnitt haben. Die Hauptflächen der Schenkel 40, 42 liegen in einer gemeinsamen Ebene. Am äußeren Rand hat jeder Schenkel eine Randleiste 44, die rechtwinklig zu der Hauptfläche orientiert ist. Der Schenkel 40 weist zusätzlich am inneren Rand noch eine Stützlasche 46 auf. Außerdem ist im Hauptteil des Eckwinkels 24 ein Langloch 48 zu erkennen, das beispielsweise zur Aufnahme einer Schraube dient, mit der sich das Gehäuse 10 mit dem Flansch eines anderen gleichartigen Gehäuses verbinden lässt.

Das offene Ende des Hohlprofils 16, das an die Lücke 22 angrenzt, bildet eine Einstecköffnung 50, in die der komplementär zu diesem Hohlprofil geformte Schenkel 40 des Eckwinkels 24 eingesteckt werden kann, in einer Einsteckrichtung, die in Fig. 1 mit dem Pfeil A bezeichnet ist. Die Randleiste 44 dieses Schenkels ist verrundet, damit das Einführen in die Einstecköffnung 50 erleichtert wird. Die ebenfalls verrundete Stützlasche 46 greift dann in den Zwischenraum zwischen der Stirnwand 26 und dem Fuß der Stützwand 36 des Hohlprofils.

Bei dem Flansch 18 ist in der äußeren Wand 28 des Hohlprofils eine schlitzförmige Öffnung 52 gebildet, die eine Einstecköffnung für den Hauptteil des Schenkels 42 des Eckwinkels 24 bildet.

In der Endphase der Einsteckbewegung, wenn der Schenkel 40 ganz in das Hohlprofil des Flansches 16 eingeschoben wird, tritt der Schenkel 42 des Eckwinkels 24 mit seinem Hauptteil in die Öffnung 52 ein, bis schließlich die Randleiste 44 dieses Schenkels auf der äußeren Wand 28 des Flansches 18 aufliegt. Dieser Zustand ist in Fig. 2 gezeigt.

Bei dieser Ausführungsform bildet somit das freie Ende des Schenkels 40 des Eckwinkels 24 einen Eingriffsteil 54 (Fig. 1), der in die Einstecköffnung 50 einführbar ist, und der Hauptteil des Schenkels 42 bildet einen Eingriffsteil 56 der in die Öffnung 52 einführbar ist.

Da der Eckwinkel 24 im fertig montierten Zustand gemäß Fig. 2 kaum noch Angriffsflächen bietet, besteht kaum die Gefahr, dass der Eckwinkel versehentlich wieder aus seinem Sitz gelöst wird. Außerdem können die Hohlprofile der Flansche und der Eckwinkel so aneinander angepasst sein, dass die Eingriffsteile 54 und 56 kraftschlüssig in den zugehörigen Öffnungen gehalten werden.

Wahlweise kann vor der Montage ein Kleber oder ein Dichtmittel auf die Hauptflächen des Eckwinkels 24 aufgebracht werden, so dass nach dem Einstecken in die Hohlprofile ein fester Sitz und/oder eine gute Abdichtung erreicht wird. Dazu können beispielsweise pastöse oder schaumartige Dichtmittel, sowie ggf. nachträglich aufquellende Dichtmittel verwendet werden. Es können jedoch auch feste Dichtungsmatten oder Formteile zur Abdichtung vorgesehen werden.

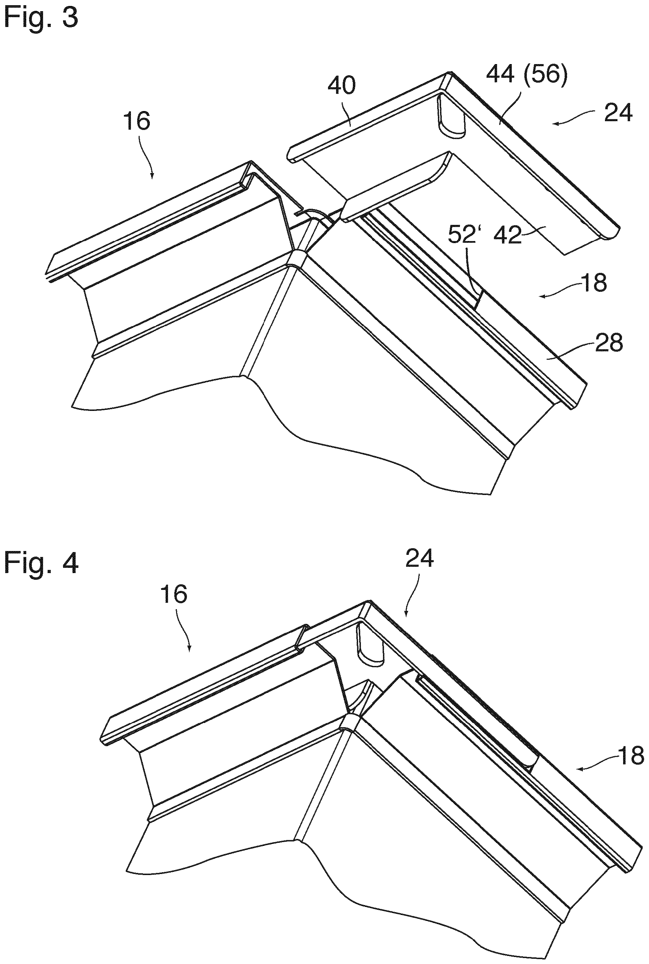

Fig. 3 und 4 zeigen ein abgewandeltes Ausführungsbeispiel, das sich von dem Beispiel nach Fig. 1 und 2 nur dadurch unterscheidet, dass in der äußeren Wand 28 des Flansches 18 anstelle der schlitzförmigen Öffnung 52 eine Öffnung 52' vorgesehen ist, die sich praktisch über die gesamte Breite dieser äußeren Wand 28 erstreckt und zu der Randleiste 44 des Schenkels 42 des Eckwinkels 24 komplementär ist. Im Endzustand (Fig. 4) füllt diese Randleiste 44, die hier Teil des Eingriffsteils 56 ist, die Öffnung 52' vollständig aus, so dass die Außenflächen des Eckwinkels 24 und des Flansches 18 miteinander bündig sind.

Wahlweise kann, obgleich dies hier nicht gezeigt ist, auch die Randleiste des anderen Schenkels 40 in ihrem vorderen, den Eingriffsteil 54 bildenden Abschnitt so abgesetzt sein, dass im Endzustand auch die Außenflächen des Flansches 16 und des Eckwinkels 24 miteinander bündig sind.

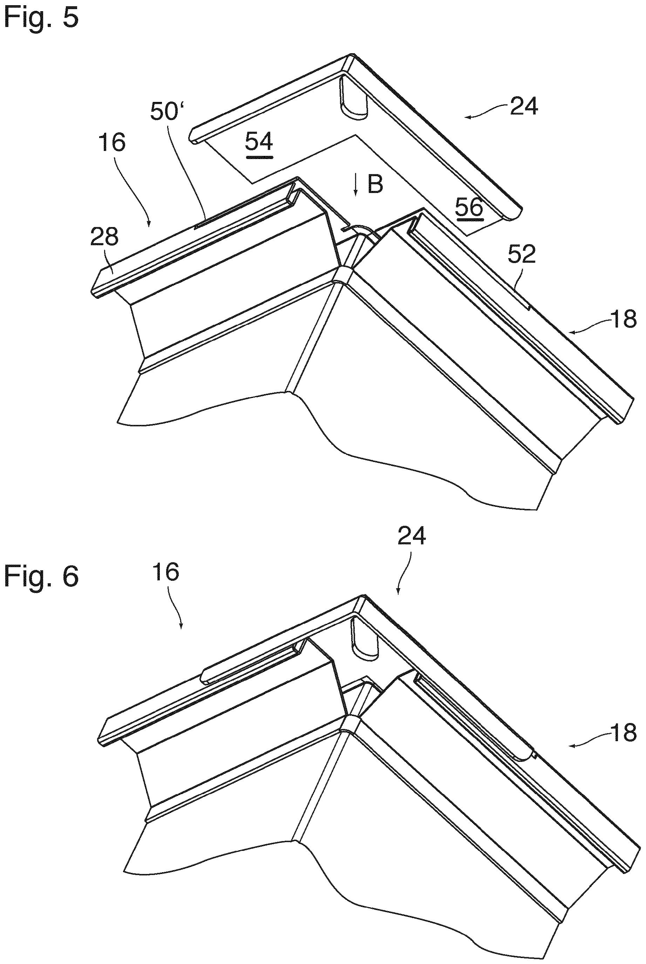

Fig. 5 und 6 zeigen ein Ausführungsbeispiel, das sich von dem Beispiel nach Fig. 1 und 2 dadurch unterscheidet, dass auch in der äußeren Wand 28 des Flansches 16 eine schlitzförmige Einstecköffnung 50' gebildet ist, die spiegelbildlich zu der Öffnung 52 im Flansch 18 ist. Die Eingriffsteile 54 und 56 des Eckwinkels 24 werden bei dieser Ausführungsform nur durch die Hauptteile der Schenkel 40 und 42 gebildet. Eine mögliche Einsteckrichtung ist hier mit einem Pfeil B bezeichnet und verläuft beispielsweise diagonal zur Flanschecke.

Auch diese Ausführungsform lässt sich analog zu Fig. 3 und 4 so abwandeln, dass die Einstecköffnung 50' und auch die Öffnung 52 zu Öffnungen analog zu der Öffnung 52' in Fig. 3 erweitert sind. Auch in diesem Fall werden die Eingriffsteile 54 und 56 in den längeren Schenkeln des L' des jeweiligen Hohlprofils stabil geführt und ggf. kraftschlüssig gehalten.

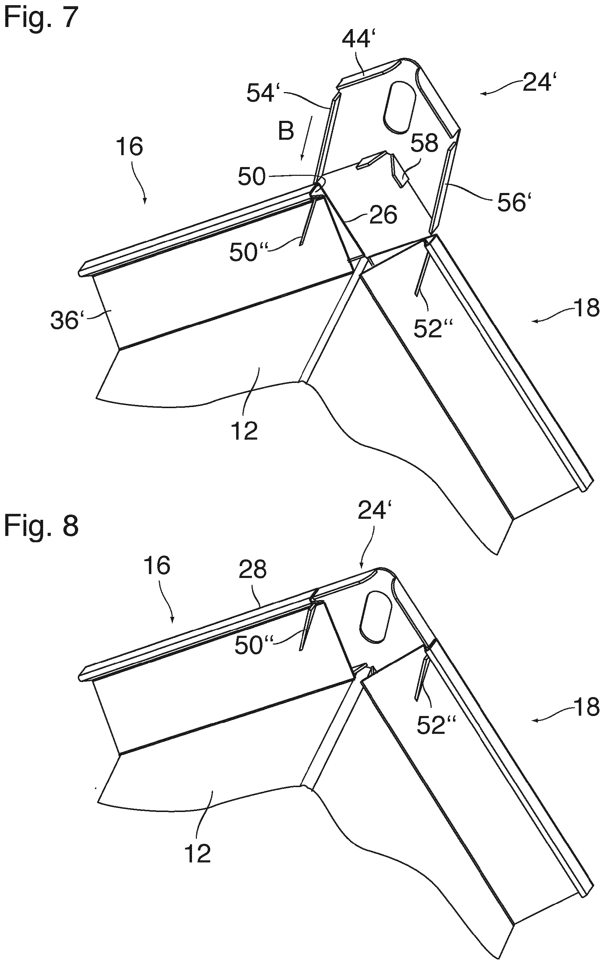

Fig. 7 und 8 zeigen ein Ausführungsbeispiel, bei dem die Einsteckrichtung B ebenfalls diagonal zur Flanschecke verläuft. Die Hohlprofile der Flansche 16 und 18 unterscheiden sich von den Hohlprofilen in Fig. 1 und 2 im wesentlichen dadurch, dass die Rückwand 34 fortgelassen ist und sich stattdessen eine verlängerte Stützwand 36' unmittelbar an die innere Wand 32 anschließt.

Die offenen Enden der kürzeren, äußeren Schenkel der L-förmigen Hohlprofile bilden jeweils eine Einstecköffnung 50. Außerdem sind in den Stützwänden 36 schlitzförmige Einstecköffnungen 50" und 52" gebildet, die in der Einsteckrichtung B verlaufen.

Bei der Flanschecke nach Fig. 7 und 8 ist ein modifizierter Eckwinkel 24' vorgesehen, bei dem die Hauptfläche der beiden Schenkel parallel zu den Stirnwänden 26 der Flansche 16, 18 verläuft. Eingriffsteile 54' und 56' werden hier durch Laschen gebildet, die unter einem Winkel von 90° von der Hauptfläche des betreffenden Schenkels des Eckwinkels 24' abgekantet sind und somit durch die Einstecköffnung 50 in die schlitzförmigen Einstecköffnungen 50", 52" eintreten können. Am äußeren Rand weist der Eckwinkel 24' Randleisten 44' auf, die im Endzustand (Fig. 8) mit den äußeren Wänden 28 der Flansche 16, 18 bündig sind. Am inneren Rand (am unteren Rand in Fig. 7) des Eckwinkels 24' sind Stützlaschen 58 gebildet, die sich im Endzustand auf den Seitenwänden 12 des Gehäuses abstützen und so die Einstecktiefe begrenzen.

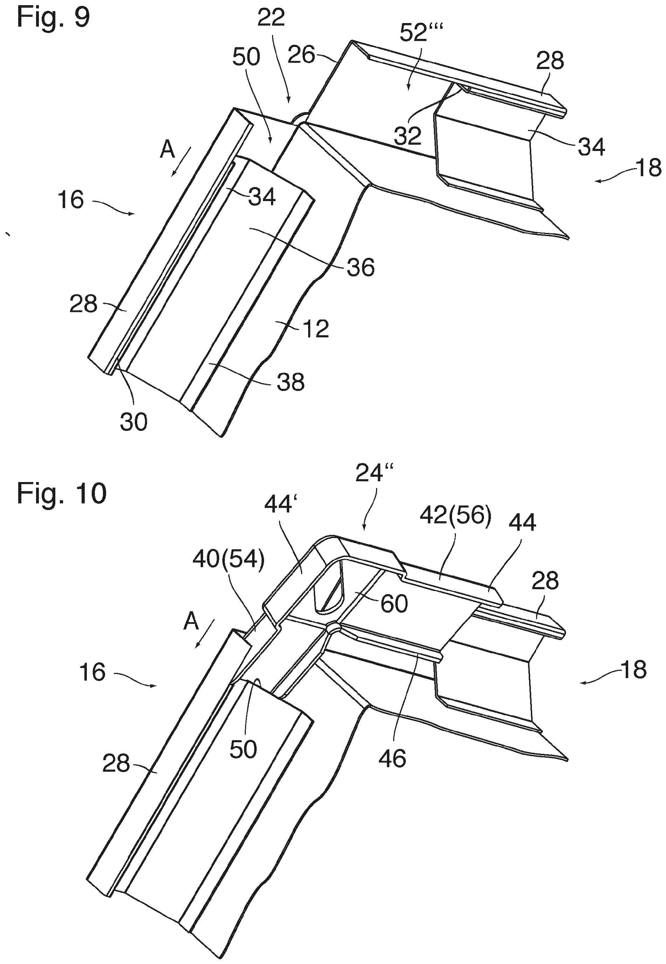

Fig. 9 bis 11 zeigen eine Ausführungsform, die dem Grundprinzip nach der Ausführungsform gemäß Fig. 1 und 2 ähnelt. Die Einstecköffnung 50 wird auch hier durch das offene Ende des Hohlprofils des Flansches 16 gebildet und definiert eine Einsteckrichtung, die durch den Pfeil A angegeben ist. Allerdings ist die Einstecköffnung 50 gegenüber Fig. 1 dadurch etwas vergrößert, dass die Enden des Verbindungsstreifens 30, der inneren Wand 32, der Rückwand 34 und der Stützwand 36 gegenüber den Enden der Stirnwand 26 und der äußeren Wand 28 zurückversetzt sind.

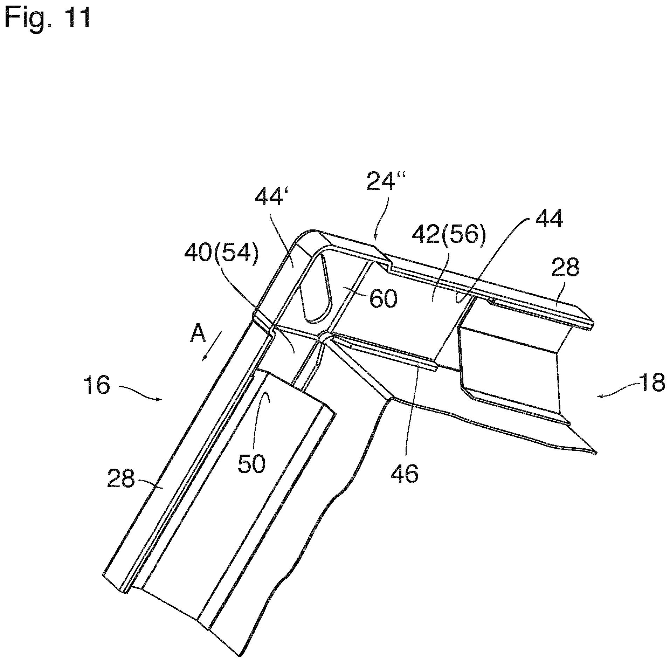

Bei dem Flansch 18 sind die Enden der Wände 30 bis 36 gegenüber den Enden der Wände 26 und 28 noch weiter zurückversetzt, nämlich um die Länge des Schenkels 42 eines zugehörigen Eckwinkels 24", der nur in Fig. 10 und 11 gezeigt ist. Dadurch wird im Flansch 18 eine relativ große Öffnung 52‴ geschaffen. Aufgrund dieser Öffnung 52‴ ist der Endabschnitt des Hohlprofils des Flansches 18 an der Rückseite vollständig offen, so dass von dem Flansch hier nur die Stirnwand 26 und die äußere Wand 28 übrig bleiben.

Bei dem Eckwinkel 24" werden die Eingriffsteile 54 und 56 durch die beiden Schenkel 40 und 42 des Eckwinkels gebildet. Jeder dieser Schenkel hat eine Randleiste 44 und eine Stützlasche 46, die zusammen mit dem Hauptteil des Schenkels ein zur Rückseite offenes Rinnenprofil bilden. Die beiden Schenkel 40, 42 sind miteinander verbunden durch ein quadratisches Zwischenstück 60, bei dem die Randleisten 44' um die Blechdicke der äußeren Wände 28 nach außen versetzt sind.

Fig. 10 zeigt den Eckwinkel 24" in einem Anfangsstadium der Einsteckbewegung, in dem der Eingriffsteil 54 gerade mit seinem äußeren Ende in die Einstecköffnung 50 eingeführt wurde. Der Eckwinkel wird dabei in einer leicht gekippten Position gehalten, so dass der Schenkel 40 mit der Einsteckrichtung A einen spitzen Winkel bildet. Dadurch ist es möglich, dass sich der andere Schenkel 42 an der äußeren Wand 28 des Flansches 18 vorbei bewegen kann.

Im weiteren Verlauf der Einsteckbewegung wird der Winkel zwischen dem Schenkel 40 und der Einsteckrichtung A zunehmend spitzer, und der Schenkel 42 wird gegen die Kante der äußeren Wand 28 des Schenkels 18 gedrückt, wobei ggf. die Stirnwand 26 des Flansches 18 etwas elastisch nachgeben kann.

Fig. 11 zeigt das Endstadium der Einsteckbewegung. Der Eingriffsteil 54 (Schenkel 40) ist nun vollständig in das Hohlprofil des Flansches 16 eingeführt und seine Längsrichtung ist parallel zur Einsteckrichtung A. Der Schenkel 42 (Eingriffsteil 56) hat die hintere Kante der äußeren Wand 28 des Flansches 18 passiert und ist in der Öffnung 52 dieses Flansches eingerastet. Seine Randleiste 44 liegt innenseitig an der äußeren Wand 28 des Flansches an. Dadurch wird der Eckwinkel 24 formschlüssig in Position gehalten. Die Außenflächen der Randleisten 44' an dem Zwischenstück 60 sind mit den Außenflächen der äußeren Wände 28 der beiden Flansche 16, 18 bündig.

## Patentansprüche

1. Gehäuse (10) mit einer Flanschecke, wobei das Gehäuse zwei an einer Kante (14) zusammenlaufende Wände (12) aufweist, von denen jeweils ein Flansch (16, 18), der ein in seiner Längsrichtung verlaufendes Hohlprofil bildet, derart absteht, dass die Flansche in einer Ebene liegen und an einer Ecke des Gehäuses zusammenlaufen und dort miteinander eine Lücke (22) bilden, und mit einem Eckwinkel (24; 24'; 24"), der in einem Stück ausgebildet ist und sich so mit beiden Flanschen (16, 18) in Eingriff bringen lässt, dass er die Lücke (22) ausfüllt, wobei
jeder der Flansche (16, 18) mindestens eine in das Innere des Hohlprofils führende Öffnung (50, 52, 52'; 50'; 50", 52"; 52‴) aufweist, von denen zumindest eine (50; 50'; 50") eine Einstecköffnung ist, und wobei der Eckwinkel zwei Eingriffsteile (54, 56; 54', 56') aufweist, von denen einer (54; 54') durch eine Bewegung des Eckwinkels in die Einstecköffnung des einen Flansches (16) einführbar ist, **dadurch gekennzeichnet, dass** das Gehäuse derart konstruiert ist, dass die Einstecköffnung es erlaubt, den Eckwinkel in einer einheitlichen, zur Ebene der Flansche parallelen Einsteckrichtung (A, B) in die Flansche einzustecken, und dabei der andere Eingriffsteil im eingesteckten Zustand die Öffnung (52; 52'; 52"; 52‴) des anderen Flansches (18) ausfüllt.

2. Gehäuse nach Anspruch 1, bei der die Öffnungen (50, 52, 52',50'; 50", 52") beider Flansche (16, 18) Einstecköffnungen sind, die eine einheitliche Einsteckrichtung (A; B) ermöglichen.

3. Gehäuse nach Anspruch 1 oder 2, bei der die Einstecköffnung (50) des einen Flansches (16) durch das offene Ende des Hohlprofils dieses Flansches (16) gebildet wird und die Öffnung (52; 52', 52"; 52‴) des anderen Flansches (18) in einer Wand des Hohlprofils dieses Flansches (18) gebildet ist.

4. Gehäuse nach Anspruch 2, bei der die Einsteckrichtung (B) diagonal zu der Flanschecke verläuft.

5. Gehäuse nach Anspruch 4, bei der die Öffnungen (50', 52) der beiden Flansche (16, 18) Einstecköffnungen sind, die als Schlitze in äußeren Wänden (28) der Hohlprofile der beiden Flansche ausgebildet sind und in einer gemeinsamen, zur Ebene der Flansche (16, 18) parallelen Ebene liegen.

6. Gehäuse nach Anspruch 4, bei der die Öffnungen (50", 52") beider Flansche (16, 18) als parallele, schräg zur Längsrichtung des jeweiligen Flansches (16, 18) verlaufende Schlitze in den Wänden der Hohlprofile der beiden Flansche ausgebildet sind.

7. Gehäuse nach Anspruch 6, bei der der Eckwinkel (24') eine ebene Hauptfläche aufweist und die Eingriffsteile (54', 56') von den zueinander parallelen Kanten dieser Wände abgewinkelte Laschen sind.

8. Gehäuse nach Anspruch 1, bei der die Einstecköffnung (50) des einen Flansches (16) so dimensioniert ist, dass sie es dem zugehörigen Eingriffsteil (54) des Eckwinkels (24") erlaubt, zumindest in der Anfangsphase der Einsteckbewegung eine gegenüber der Einsteckrichtung (A) gekippte Position einzunehmen, und bei der die Öffnung (56) des anderen Flansches (18) so in den Wänden des Hohlprofils dieses Flansches ausgebildet ist, dass der zugehörige Eingriffsteil (56) in einer Bewegung quer zu der Einsteckrichtung (A) in sie eintreten kann.

9. Gehäuse nach Anspruch 8, bei der der Eingriffsteil (56), der in der Richtung quer zur Einsteckrichtung (A) in die zugehörige Öffnung (52‴) einführbar ist, in dieser Öffnung (52‴) verrastbar ist.

## Claims

1. A housing (10) with a flange corner, the housing having two walls (12) that converge at an edge (14), wherein a flange (16, 18) that forms a hollow profile extending in its longitudinal direction projects from each of said walls (16, 18) such that the flanges lie in common plane and converge at a corner of the housing and, there, delimit a gap (22), the housing further comprising an angled corner piece (24; 24'; 24") that is formed in one piece and is configured such that it can be brought into engagement with both flanges (16, 18) so as to fill the gap (22),
wherein each of the flanges (16, 18) has at least one opening (50, 52, 52'; 50'; 50"; 52"; 52‴) that provides access to the interior of the hollow profile, at least one of said at least one openings (50; 50'; 50") being an insertion opening, and the corner piece having two engagement parts (54, 56; 54', 56') of which one (54; 54') is adapted to be inserted into the insertion opening of the one flange (16) by moving the corner piece,
**characterized in that** the housing is configured such that the insertion opening enables the corner piece to be inserted into the flanges in a uniform movement in an insertion direction (A, B) parallel to the plane of the flanges, while the other engagement part, when engaged, fills the opening (52; 52'; 52"; 52‴) of the other flange (18).

2. The housing according to claim 1, wherein the openings (50, 52, 52', 50'; 50"; 52") of both flanges (16, 18) are insertion openings enabling an insertion movement in a uniform insertion direction (A; B).

3. The housing according to claim 1 or 2, wherein the insertion opening (50) of the one flange (16) is constituted by the open end of the hollow profile of this flange (16) and the opening (52; 52'; 52"; 52‴) of the other flange (18) is formed in a wall of the hollow profile of this flange (18).

4. The housing according to claim 2, wherein the insertion direction (B) is diagonal to the flange corner.

5. The housing according to claim 4, wherein the openings (50', 52) of the two flanges (16, 18) are insertion openings that are configured as slots in outer walls (28) of the hollow profiles of the two flanges and lie in a common plane that is parallel to the plane of the flanges (16, 18).

6. The housing according to claim 4, wherein the openings (50"; 52") of both flanges (16, 18) are configured as parallel slots extending in the walls of the hollow profiles of the two flanges in a slanting direction relative to the longitudinal direction of the respective flange (16, 18).

7. The housing according to claim 6, wherein the corner piece (24') has a plane main surface and the engagement parts (54', 56') are tabs that are angled from the edges of these walls that extend in parallel to one another.

8. The housing according to claim 1, wherein the insertion opening (50) of the one flange (16) is dimensioned such that it permits the corresponding engagement part (54) of the corner piece (24") to assume, at least in an initial phase of the insertion movement, a position tilted relative to the insertion direction (A), and wherein the opening (56) of the other flange (18) is formed in the walls of the hollow profile of this flange such that the corresponding engagement part (56) can enter into this opening in a movement transverse to the insertion direction (A).

9. The housing according to claim 8, wherein the engagement part (56) that is insertable into the corresponding opening (52‴) in the insertion direction (A) is adapted to be snap-fastened in this opening (52‴).

## Revendications

1. Boîtier (10) muni d'une bride d'angle, dans lequel le boîtier comporte deux parois (12) convergeant vers une arête (14), dont une bride (16, 18) qui forme un profilé creux s'étendant dans sa direction longitudinale, fait respectivement saillie de telle sorte que les brides se situent dans un plan et convergent vers un coin du boîtier et y forment un espace vide (22) l'une avec l'autre, et muni d'une cornière d'angle (24 ; 24' ; 24") qui est formée d'un seul tenant et peut ainsi venir en prise avec les deux brides (16, 18) de sorte qu'elle remplit l'espace vide (22),
dans lequel chacune des brides (16, 18) comporte au moins une ouverture (50, 52, 52'; 50'; 50", 52"; 52‴) menant dans l'intérieur du profilé creux, dont au moins une (50 ; 50' ; 50") est une ouverture d'insertion, et dans lequel la cornière d'angle comporte deux parties de prise (54, 56 ; 54', 56') dont l'une (54 ; 54') peut être insérée par un mouvement de l'angle de coin dans l'ouverture d'insertion de la première bride (16), **caractérisé en ce que** le boîtier est construit de telle sorte que l'ouverture d'insertion lui permet d'insérer la cornière d'angle dans la bride dans une direction d'insertion (A, B) uniforme, parallèle au plan de la bride et, à l'état inséré, l'autre partie de prise remplit l'ouverture (52 ; 52' ; 52" ; 52"') de l'autre bride (18).

2. Boîtier selon la revendication 1, dans lequel les ouvertures (50, 52, 52', 50' ; 50", 52") des deux brides (16, 18) sont des ouvertures d'insertion qui permettent d'obtenir une direction d'insertion (A ; B) uniforme.

3. Boîtier selon la revendication 1 ou 2, dans lequel l'ouverture d'insertion (50) de la première bride (16) est formée par l'extrémité ouverte du profilé creux de cette bride (16) et l'ouverture (52 ; 52', 52"; 52‴) de la seconde bride (18) est formée dans une paroi du profilé creux de cette bride (18).

4. Boîtier selon la revendication 2, dans lequel la direction d'insertion (B) s'étend en diagonale par rapport à la bride d'angle.

5. Boîtier selon la revendication 4, dans lequel les ouvertures (50', 52') des deux brides (16, 18) sont des ouvertures d'insertion qui sont réalisées sous forme d'encoches dans des parois extérieures (28) du profilé creux des deux brides et se situent dans un plan commun, parallèle au plan des brides (16, 18).

6. Boîtier selon la revendication 4, dans lequel les ouvertures (50", 52") des deux brides (16, 18) sont réalisées dans les parois du profilé creux des deux brides, sous forme d'encoches parallèles s'étendant de manière inclinée par rapport à la direction longitudinale de la bride (16, 18) respective.

7. Boîtier selon la revendication 6, dans lequel la cornière d'angle (24') comporte une surface principale plane et les parties de prise (54', 56') sont des languettes repliées des bords mutuellement parallèles de ces parois.

8. Boîtier selon la revendication 1, dans lequel l'ouverture d'insertion (50) de la première bride (16) est dimensionnée de sorte qu'elle permet à la partie de prise (54) associée de l'angle de coin (24") de prendre une position basculée par rapport à la direction d'insertion (A) au moins pendant la phase initiale du mouvement d'insertion (A), et dans lequel l'ouverture (56) de la seconde bride (18) est formée dans les parois du profilé creux de cette bride de sorte que la partie de prise (56) associée peut entrer dans celle-ci lors d'un mouvement transversal à la direction d'insertion (A).

9. Boîtier selon la revendication 8, dans lequel la partie de prise (56) qui peut être insérée dans l'ouverture (52"') associée dans la direction transversale à la direction d'insertion (A), peut être encliquetée dans cette ouverture (52"').
